# EUROPEAN PATENT APPLICATION

(11) **EP 2 181 895 A2**
(43) Date of publication of application: **05.05.2010**
(21) Application number: 09174463.1
(22) Date of filing: 29.10.2009
(51) Int. Cl.: B60R 11/02, H04R 1/02

(54) **Asymmetrical sliding loudspeaker arrangement**

(30) Priority: 29.10.2008 DK 200801486
(71) Applicant: Bang&Olufsen A/S, 7800 Struer (DK)
(72) Inventor: Sørensen, Bjarne, 7790 Thyholm (DK); Pedersen, Christian Gejl, 7500 Holstebro (DK)
(74) Representative: Tellefsen, Jens J.

(57) **Abstract**

The present invention relates to a loudspeaker arrangement, in which the position of the transducer unit is adjustable. The adjustment of the position is performed to obtain an enhanced sound quality as perceived by a listener. The tweeter position may be varied, this to position the center point of the speaker into different positions in a 3-dimensional space determined by the X,Y,Z axes. The sound directed from one or more transducer units may be targeted towards one or more specific listeners. The position of the transducer unit is obtained by asymmetrical sliding means.

The invention is targeted primarily towards sound applications in smaller closed domains/rooms e.g. in a car.

## Description

### Field of the Invention

The present invention relates to a loudspeaker arrangement, in which the position of the sound transducer unit, e.g. a tweeter position is adjustable.

### Background of the Invention

The invention solves a fundamental acoustical problem, in that a tweeter has a very narrow directivity, causing inhomogeneous timbral balance with respect to listening angle. Furthermore the narrow directivity also makes the reproduction very sensitive to any obstacles in the sound waves path. A listener will furthermore receive the emitted sound differently dependeing on the physical listening position relative to the loudspeaker.

In order to address some of the problems associated with the narrow directivity US 4630303 proposes to mount the loudspeaker in such a way whereby it is possible to move the tweeter into a position where the emission of sound from the tweeter is not obstructed by obstacles, such as for example a backseat, a headrest (in a car) or the like.
With this system the problem remains however of how to improve the sound presentation and thereby the listening experience for a listener, for example traveling in a car. The tweeter will have a more free or uninterrupted directivity line, and as such the sound will be less distorted, but the arrangement will provide the same sound field regardless of the number and position of listeners.

In WO2008/007502 a system is disclosed where the loudspeakers may be turned. By turning the loudspeakers, for example such that one loudspeakers sound is bounced of a side of the interior of a car, the sound is delayed relative to a user, such that the sound from another loudspeaker positioned further away will arrive at the listener at the same time, thereby providing a more correct listening experience.
This system relies on the surfaces off which they bounce the sound to be more or less sound reflecting without distortion, and to reflect the sound at a correct angle. Inside a vehicle, the surfaces are often provided with noise reducing coverings, and as such the reflective characteristics of the surfaces is questionable, and furthermore the surfaces are seldom plane, but usually curved at various curvatures. These conditions have a severely adverse effect on the sound reproduction.

### Description of the Invention

The adjustment of the position is performed to obtain an enhanced sound quality as perceived by a listener. The invention is targeted primarily towards sound applications in smaller closed domains/rooms e.g. in a car.

The tweeter position may be varied, to position the center point of the speaker into different positions in a 3-dimensional space determined by the X,Y,Z axes.
The invention may be considered to be an Adaptive Tweeter Positioning System.

Although the invention is explained with reference to a tweeter, and that the narrow directive characteristics of a tweeter benefits the most from the inventive principles of the present invention, other transducer units are also contemplated for use with the present invention.
- In a first aspect of the invention a loudspeaker arrangement is provided, where one or more transducers is mounted on or in a platform, where said platform comprises sliding means for sliding said platform relative to a base, where the position of the one or more transducer units is adjusted, where the center point of each of the one or more transducers is defined by its X,Y,Z position, where said center point is moved from a first X₁,Y₁,Z₁ position to a second X₂,Y₂,Z₂ position, the second position being different from the first position; and further moved from the second X₂,Y₂,Z₂ position to a third X₃,Y₃,Z₃ position, the third position being different from the second position, where the movements between said first, second and third positions are achieved by rotating and/or sliding said platform.

By this arrangement is achieved that the transducer unit is brought into positions where it may directly emit sound to the listener. Typically the positions are the idle position, an intermediate position and its operative position. The idle position is typically the position where the transducer and platform is substantially flush with the surroundings into which the transducer and platform are mounted. The surroundings may be an interior surface of a vehicle. In the idle position the transducer is not supposed to supply the most optimal sound field to a listener. In the intermediate position the platform and transducer is typically positioned in a position elevated from the flush position. From this intermediate position the system will adjust the platform and thereby also the transducers according to the listener or listeners positions.

By splitting the movement in two sections it becomes possible to move the transducer in two different planes, i.e. to change any of the X,Y and Z positions independently.

Further advantageous embodiments are set out in the dependent claims.

In a second aspect of the invention the distributed sound from each of the one or more transducers may be directed individually towards each of one or more listeners.

The individual positions may be determined by miscellaneous premises e.g. but not limited to:
- An idle position in which the transducer is inactive.
- An active first position in which the center point of the transducer (tweeter) is in one X,Y,Z position, that is different from the idle position.
- An active second position in which the center point of the transducer (tweeter) is in another X,Y,Z position, that is different from the first position.
- An active third position in which the center point of the tweeter is in a third X,Y,Z position, that is different from the first and second position.

In a third aspect of the invention
- an X,Y,Z position of a transducer may be related to a control command entered manually by a listener, and /or
- an X,Y,Z position of a transducer may be derived automatically from the mode of operation of the loudspeaker arrangement, and/or
- an X,Y,Z position of a transducer may be related automatically to the position of the one or more listeners.

The tweeter may be brought into the individual X,Y,Z positions determined by different modes of operations to accomplish that the direct sound is optimized depending on the locations of persons, e.g. in the car:
- Manually commanded by a listener, i.e. "'goto' idle", "'goto' first", "'goto' second", or "'got' third".
- Controlled by input from sensor means:
   o If listener is in front seat left then "'got' first position";
   o If listener is in front seat right then "'got' second position";
   o If listener is in back seats then "'got' third position";
   o If no listener in seats then "'got' idle".

In these modes of operation the listener may manually determine how the sound field, i.e. is defined. The sound field is here to be understood as the resulting sound emmision from the at least one transducer. In practice, as for example seen in a vehicle, 4, 6 or more discrete positioned transducers will cooperate in order to create a sound field, giving the listener, the passengers in the vehicle, the best reproduction of the emitted sounds.
Alternatively, sensors may detect where the listeners are positioned, for example by placing sensors in the seats or in other ways, and according to pre-programmed configurations position the various transducers in optimal positions in order to create an optimal sound field.

A default mode of operation may be defined and related to one specific listener. The relevant set of adjustment parameters like speaker positions and related acoustical setting(s) is applied when this actual mode of operation is selected.

In yet another aspect of the invention:
- the loudspeaker arrangement is including acoustical adjustment means related to active transducers, and
- the acoustical adjustment is related to a specific X,Y,Z position of a transducer unit.

By including active speakers in a loudspeaker arrangement it becomes possible to adjust very precisely per sound channel, where every sound channel includes a sound transducer an amplifier and filter means.

The adjustment process provides the settings of the sound parameters of one or more of the parameters: gain, equalization and delay for one sound channel, to be applied in one sound field zone related to the physical position of first group of people including one or more listeners.
To accommodate for the handling more zones including different groups of people the adjustment process provides the settings of the sound parameters; gain, equalization and delay for one sound channel, to be applied in one sound field zone related to the physical position of one or more other groups of people including one or more listeners.

A listener position is detected via standard sensor means like switches or infrared detectors or strain gauges or temperature sensitive detectors.

The adjustment process is to be automatically executed and/or controlled by the audio amplifier means, including a digital signal processor, which drives the loudspeaker system. The reconfiguring means is embedded into an audio reproduction system.

In a preferred embodiment, the adjustment is controlled via a table mapping the mode of operation to adjustment parameters for each speaker in every channel or just relevant channels. The adjustment parameters are e.g. but not limited to: equalization, delay and gain.

The table may be represented as one or more data set as most appropriate to the digital controller unit. E.g. one data set may contain the relations among:
- listener position,
- loud speaker channel #,
- parameter settings (EQ, delay, and gain).

Alternatively to the table representation of the adjustment data, the relevant information data may be embedded in the sound controller program logic.

An additional aspect of the invention is that the movement from one X,Y,Z position to another X,Y,Z position is controlled by asymmetrical sliding means.

The means for bringing the tweeter center point from one position to another position is in terms of a 3-dimensional movement, i.e. a combination of sliding and tilting. This may be considered as an asymmetrical sliding mechanism.

Alternative means may be applied to implement the asymmetrical sliding mechanism:
- Two or more tooth wheels that are turning around non-concentric axes of rotation.
- Two or more motorized arms with connected hinges.
- Two or more motorized spindles with connected flexible cardan joint.
- Two or more wires/cables connected via a wheel and a strut.

A preferred embodiment includes the invention, as a sliding tweeter, in two or more identical loudspeaker arrangements to constitute a sound system.
Thus individually subsystems may support the feature in a combined mode of operation taking, and configure accordingly:
- front seat(s) only,
- back seat(s) only,
- front an back seat(s) combined.

In a preferred embodiment a backlight is activated according to the mode of operation of the transducer, e.g. a light in on when the speaker is active. The light means being integrated into the moving part of the tweeter encapsulation or alternatively being integrated into the fixed part of the tweeter housing.

### Description of the Drawing

In the following, a preferred embodiment of the invention will be described with reference to the drawing wherein:
Figure 1 displays examples of sound directivity according to speaker position adjustment;
Figure 2 displays an example of an active loudspeaker concept;
Figure 3 displays examples of alternative transducer center point X,Y,Z positions;
Figure 4,5,6,7 & 8 display the slider means for the position adjustment.
Figure 9 illustrates examples of combined tilt and slide movements

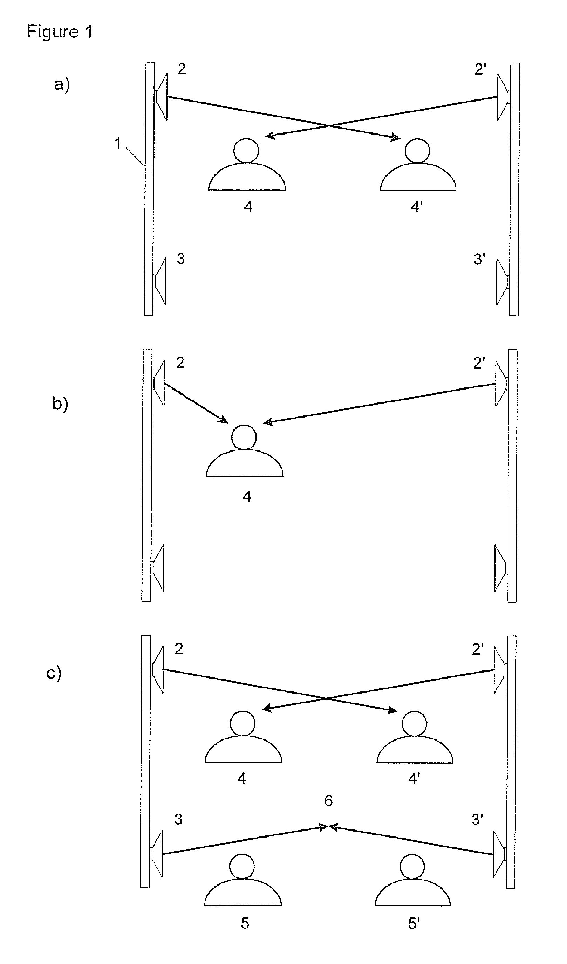

Figure 1, displays examples of different positions of tweeters in a loudspeaker system.
Figure 1.a displays how it's detected that two listeners are present in a sound field zone and the sound from the two sound channels 2,2' are directed towards two listeners 4,4' accordingly. The system adjustment process provides the settings of the related sound parameters: gain, equalization and delay for the sound channels. In the illustrated example the distance from the transducer 2 to 4' is equal to the distance from 2' to 4, whereby the two listeners will experience the same sound experience.

Figure 1.b displays how it's detected that one listener 4 is present in a sound field zone and the sound from the two sound channels 2,2' is directed towards the one listener 4 accordingly. The system adjustment process provides the settings of the related sound parameters: gain, equalization and delay for the sound channels. In the present example the sound channel 2 will have a delay such that the sound emitted from 2' will reach the listener at the same time as sound emitted from 2, whereby the sound reproduction is optimal. The X,Y,Z position of transducer 2' is the same as with the example mentioned above in fig. 1a) whereas the X,Y,Z position of transducer 2 in fig 1b) is different from the same transducer in fig 1a.

Figure 1.c displays how it's detected that two listeners 4,4' are present in one sound field zone, and two listeners 5,5' are present in another sound field zone and the sound from the four sound channels 2,2',3,3' are directed towards the listeners accordingly. According to system requirement the sound may be directed towards the listeners 4,4' and/or directed towards an artificial center point 6, as appropriate. The system adjustment process provides the settings of the related sound parameters: gain, equalization and delay for the sound channels.

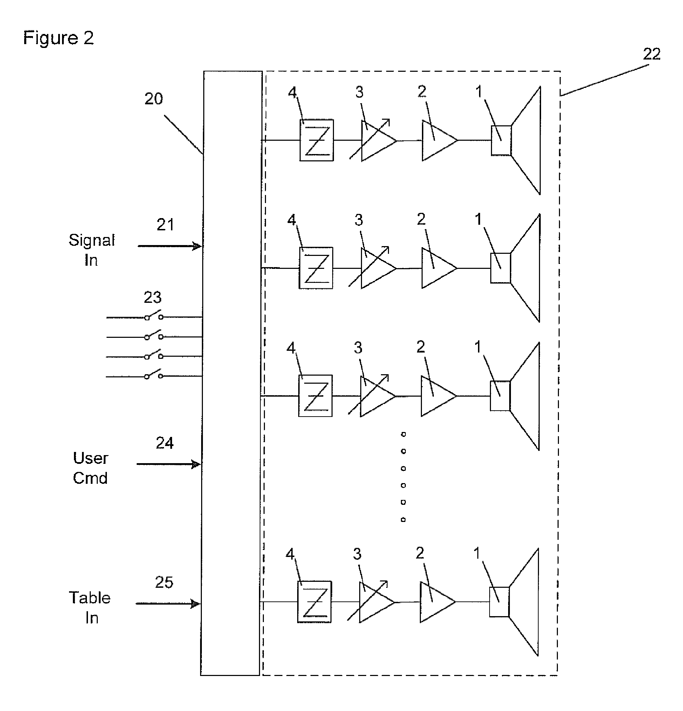

In Figure 2, displays an example of an active loudspeaker concept (20).

In the preferred embodiment an audio reproduction system comprising active sound transducers including an amplifier (2) is provided for each transducer unit (1). This type of amplifier is e.g. the technology ICEpower from Bang & Olufsen DK.

In a high quality audio reproduction system a dedicated filter means, an equalizer, (3) is provided per amplifier (2). The means (3) provides a frequency dependent amplification to control the overall gain, which may be regulated up or down as required. Means for down regulation may be as simple as adjustment of a resistive means serial connected to the loudspeaker module.

To control the sound distribution into individual zones of sound fields the sound delay among channels must be controlled. In a preferred embodiment the delay (4) is controlled individually per sound channel.

Any number of channels (22) may be handled; having a corresponding table complex related according to the actual functional system requirements.

The audio reproduction system may be an audio amplifier (20), including a digital signal processor, to controlling and driving the loudspeaker channels (22), and to provide a signal (21) that's amplified and filtered and delayed accordingly.

Input from sensor means (23) determines the mode and functional operation of the control system and may be of different nature e.g. but not limited to: simple switch, accelerometer, infrared detection, thermal sensing etc.
In the preferred embodiment the sensors primarily detects the position of a user in a room/space, the position to be related to the sound field that's relevant for the one or more users /listeners.
E.g. in a vehicle the detection of a user position is where the individual users are seated. The detection in this system may be via a simple switch in every seat, or via switches related to the safety belts.

Additional control signals may be received as user commands (24).The additional control signal information to be used as input into the digital signal processor to control mode and functional operation of the sound system.

In a preferred embodiment the reconfigure means is imbedded into the controller of the audio sound system. Thus the audio sound system is the master having the digital signal processor means (20) that initiates, controls and applies the reconfiguring process. Alternative predefined table definitions may be loaded into the digital signal processor (20) from external means e.g. a laptop/PC (25).

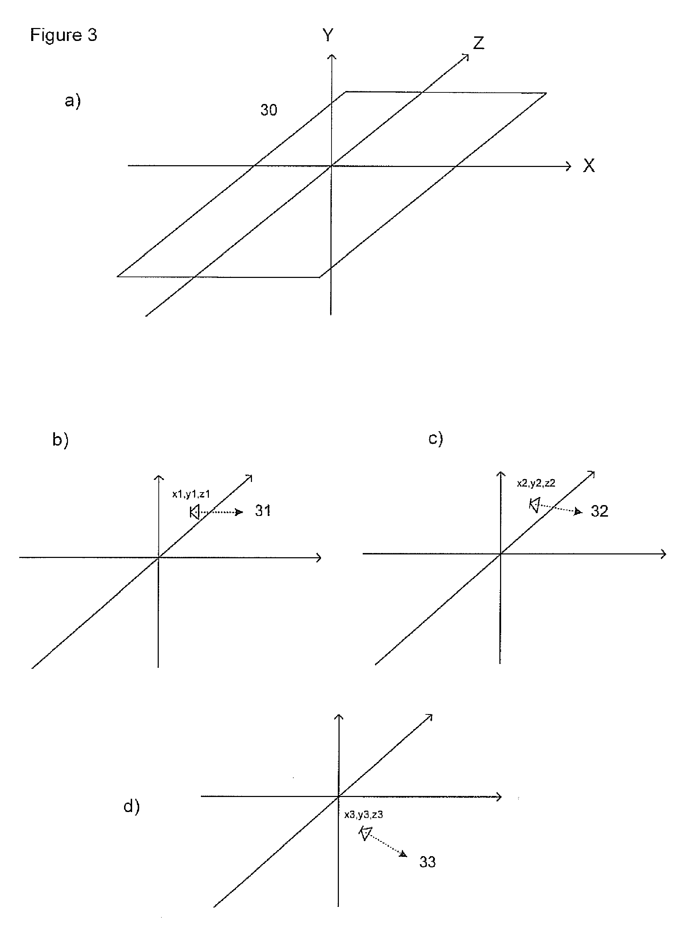

Figure 3.a, displays how the center point of a tweeter/transducer may relate to the position in a X,Y,Z coordinate system (30).

Figures 3.b, 3.c and 3.d illustrate three different positions of the tweeter. Each position has a different radiation of the distributed sound, the positions named x1,y1,z1 with the direction (31) and x2,y2,z2 with the direction (32) and x3,y3,z3 with the direction (33).

According to actual product requirement for the radiation in a given system any relevant combinations of x,y,z positions may apply. Thus, two different positions may have the same coordinate value of one or two of the parameters. An example is that from one position to another position the y value does not change.

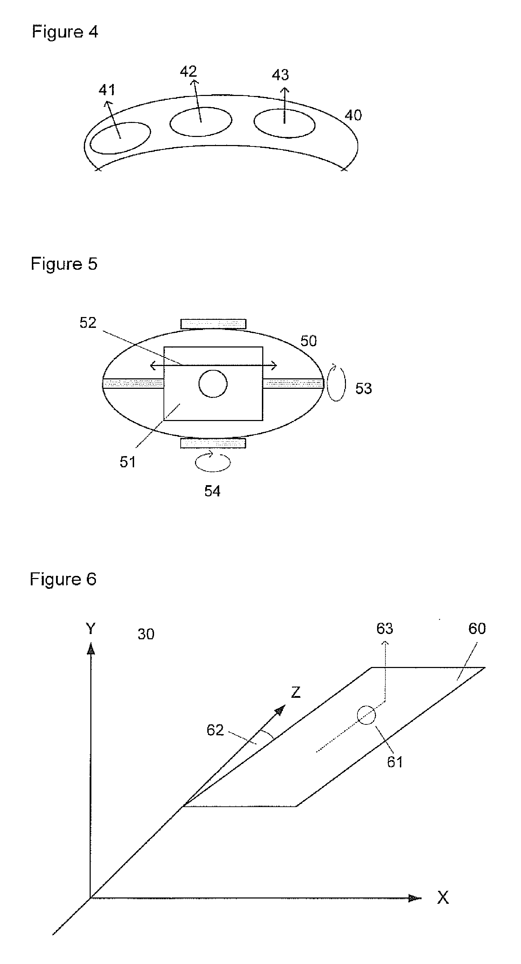

Figure 4, illustrates an example of how a movement of the tweeter along a double curved fixture (40) may give alternative radiations - sound emitting directions (41,42,43) of the distributed sound from the tweeter.
Different outlines of the fixture may apply according to product requirements. For example a plane suspended by three or more fixpoints, where each of the fixpoints having different x,y,z coordinate values.

Figure 5, illustrates an embodiment (50) in which motorized gyro means 53,54 provides the asymmetrical sliding. The fixture of the tweeter is mounted onto a movable platform/sledge (51), that may be rotated around two axes (53,54) and move along at least one of the axes of rotation (53). In this manner it is possible to manipulate the sledge and thereby the center point of the transducer continuously and steplessly into any desired sound emitting position, only limited by the axes 53,54, and the sledges movement 52 along the axis 53.

Figure 6, illustrates an embodiment (60) in which a motorized wheels arrangement provides the asymmetrical sliding. The platform (60) of the tweeter (61) is a movable sledge, that's angled 62 relative to one plane in a coordinate system (30), e.g. the YZ plane. A movement of the fixture (60) along a path (63) in the YZ plane repositions the centre of the tweeter (61). In the illustrated schematic embodiment, the first part of the path 63 is in the plane 60 whereas the latter part of the path is at an angle to the plane 60. The movement of the tweeter (transducer) 61 will therefore first be in the ZX plane and thereafter in the YZ plane.

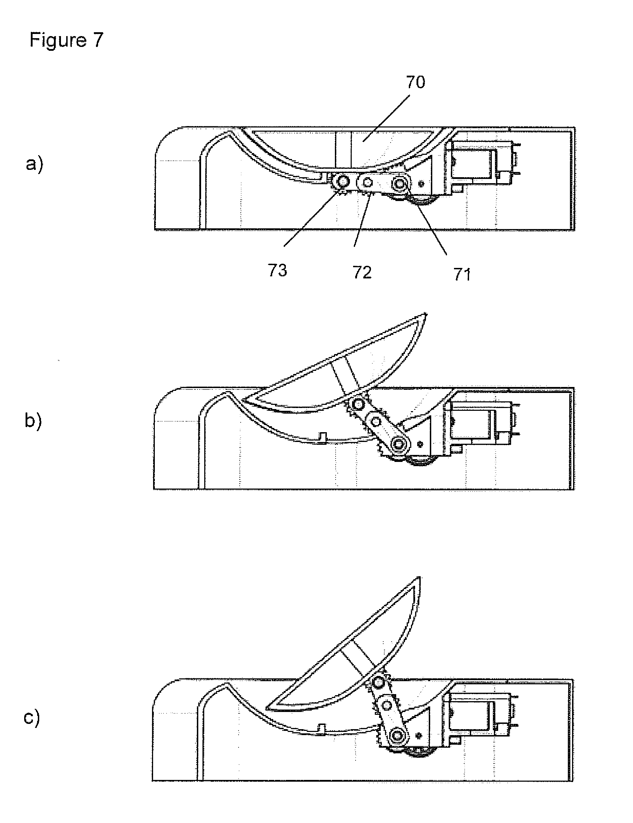

Figure 7, illustrates an embodiment with one tweeter mounted in a platform (70) in which a motorized wheels arrangement provides the asymmetrical sliding. Three or more wheels (71,72,73) in conjunction with related axels support the movement. The wheels 71,72,73 are in this embodiment toothed wheels, which may be adjusted relative to each other. In the sequence of movements illustrated in fig 7 a) to c) the center point of the transducer is initially elevated and tilted slightly (from fig 7 a to 7b). Thereafter the centerpoint is tilted more and moved laterally (a sliding movement relative to the surroundings 74).

Three positions are illustrated where the tweeter is in a closed position (a), and a partly open position (b) and a fully open position (c).

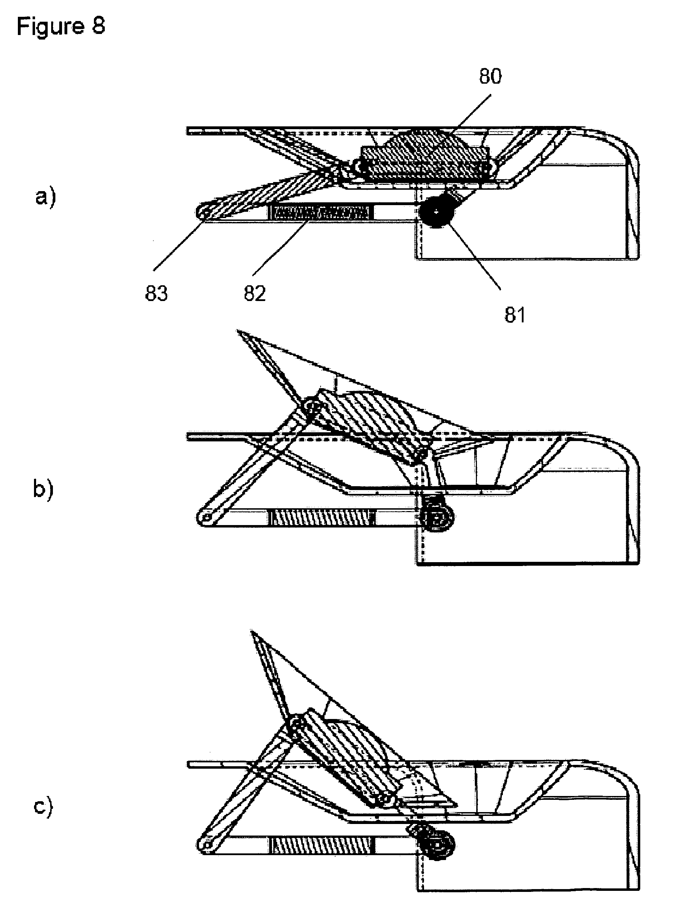

Figure 8, illustrates an embodiment with one tweeter mounted in a platform (80) in which a motorized arms arrangement provides the asymmetrical sliding. Three or more arms (81,82,83) in conjunction with related hinges support the movement.
Three positions are illustrated where the tweeter is in a closed position (a), and a partly open position (b) and a fully open position (c).
The first movement from fig 8a to 8b involves the platform being elevated, tilted and slid (towards the left in the fig). This is achieved by the arms 81, and 83 rotating relative to the arm 82. The second movement is achieved by further rotating the arm 81 whereby the platform 80 is lowered relative to the surroundings 84, and slid (toward the left in fig 8).

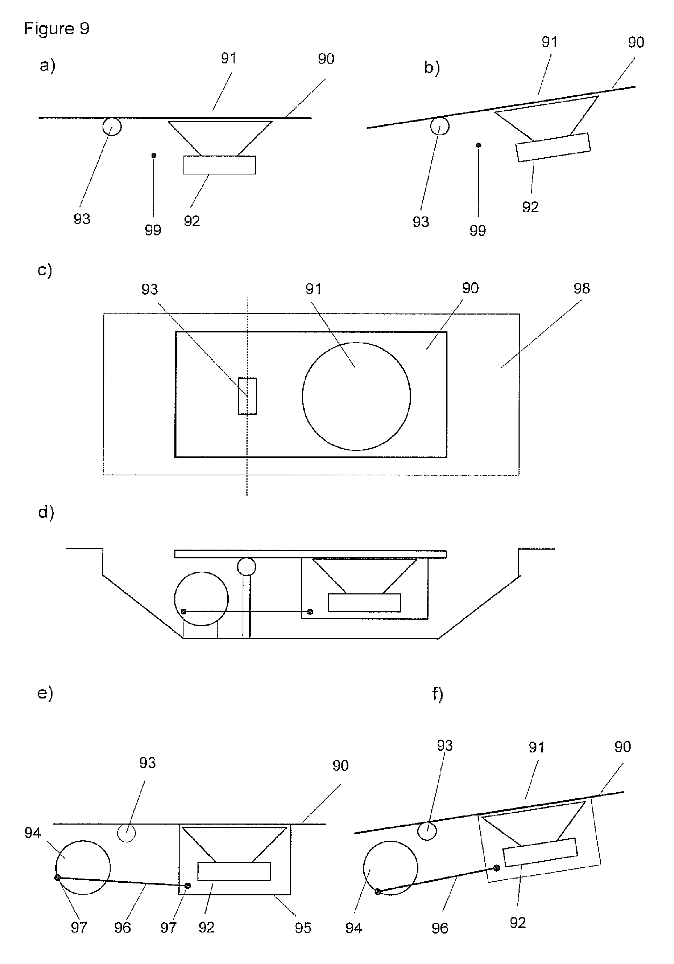

Figure 9 displays a preferred embodiment of the invention.
In Figure 9.a the preferred embodiment includes a platform (90) onto which a loudspeaker unit (92) is mounted. The platform (90) is tiltable around means e.g. a hinge (93) that allows the platform to be in a first position, as shown in Figure 9.a, and brought to a second position, as shown in Figure 9.b.
In addition a light source (99) is activated when the platform is in the second position. When the light is activated light will shine out between the platform and the surrounding surface into which the platform (and transducer) is mounted.

Figure 9.c displays a top view of the platform (90) and an example of one position of the hinge (93). The hinge may be fixed onto the compartment (98) by alternative known standard means. The compartment is a depression in the surface surrounding the platform. The platform surface may be of any material e.g. but not limited to metal, plastic, wood, and act as a front plate for the loudspeaker unit in terms of a speaker grill (91) with perforated holes that allows the sound waves to pass when the loudspeaker unit is active.

The compartment (98) acts as a storage depression for the loudspeaker unit. The loudspeaker unit includes a housing (95) for the loudspeaker (92). The housing will typically be designed to enhance the acoustical quality of the distributed sound.

Optionally the tilting function may be extended with means for sliding. The means for sliding being e.g. a motorized spindle that may slightly move the platform (90) along the line (100) or alternatively along a curve (not illustrated) oriented more or less in the same general direction as the line 100. These combined means enable that the centre point of the loudspeaker unit may be positioned and repositioned in a 3 dimensional space.

The light issued from the light source (99) may be mounted into, and enlightens the grave of the compartment, thus the light becomes a background light and a surrounding light of the platform (90).

Figure 9.d displays a side view of the platform with the loudspeaker unit located into the compartment, and the motorized means supporting the tilting of the platform.

In Figure 9.e & 9.f the preferred embodiment includes standard means where a motorized wheel (94) has a connection point (97) that connects to another connection point (97) on the platform (90) via a connection element (96).
One position of the wheel (94) corresponds to the first position of the platform and another position of the wheel (94) corresponds to the tilted second position of the platform (90).

The connection element (96) may be attached to the platform by alternative means e.g.: to a connection element, like a hinge that is fixed onto the platform (90) directly, or to the loudspeaker housing (95), or alike.

The invention is targeted primarily towards sound applications in smaller closed domains/rooms e.g. in a car.

## Claims

1. A loudspeaker arrangement, where one or more transducers is mounted on or in a platform, where said platform comprises sliding means for sliding said platform relative to a base, where the position of the one or more transducer units is adjusted, where the center point of each of the one or more transducers is defined by its X,Y,Z position, where said center point is moved from a first X₁,Y₁,Z₁ position to a second X₂,Y₂,Z₂ position, the second position being different from the first position; and further moved from the second X₂,Y₂,Z₂ position to a third X₃,Y₃,Z₃ position, the third position being different from the second position, where the movements between said first, second and third positions are achieved by rotating and/or sliding said platform

2. A loudspeaker arrangement according to claim 1, where the direct sound distributed from the one or more transducers is distributed depending on the location of one or more listeners.

3. A loudspeaker arrangement according to claim 2, where the distributed sound from each of the one or more transducers may be directed individually towards each of one or more listeners.

4. A loudspeaker arrangement according to claim 1, where an X,Y,Z position may be related to a control command entered manually by a listener.

5. A loudspeaker arrangement according to claim 1 where an X,Y,Z position may be derived automatically from the mode of operation of the loudspeaker arrangement.

6. A loudspeaker arrangement according to claim 1 where an X,Y,Z position of a transducer may be related automatically to the position of the one or more listeners.

7. A loudspeaker arrangement according to claim 1, where the loudspeaker arrangement is including acoustical adjustment means related to active transducers.

8. A loudspeaker arrangement according to claim 1, where an acoustical adjustment is related to a specific X,Y,Z position of a transducer unit.

9. A loudspeaker arrangement according to claim 1, where the movement from one X,Y,Z position to another X,Y,Z position is controlled by asymmetrical sliding means, including three or more wheels.

10. A loudspeaker arrangement according to claim 1, where the movement from one X,Y,Z position to another X,Y,Z position is controlled by asymmetrical sliding means, including three or more arms.

11. A loudspeaker arrangement according to claim 1, where the movement from one X,Y,Z position to another X,Y,Z position is controlled by gyro alike fixture means.

12. A loudspeaker arrangement according to any of the preceding claims, where a tweeter backlight is activated according to the mode of operation of the transducer.
